Europäisches Patentamt

European Patent Office

Office européen des brevets

(11) Numéro de publication : **0 463 960 A1**

# (12) DEMANDE DE BREVET EUROPEEN

(21) Numéro de dépôt : **91401720.7**

(51) Int. Cl.⁵ : **G01J 3/50**

(22) Date de dépôt : **26.06.91**

(30) Priorité : **26.06.90 FR 9007991**

(43) Date de publication de la demande :
**02.01.92 Bulletin 92/01**

(84) Etats contractants désignés :
**AT BE CH DE DK ES GB GR IT LI LU NL SE**

(71) Demandeur : **Devaure, Etienne**
**Résidence ˝La Grande Etoile˝, Batiment**
**A-R.N.8**
**F-13090 Luynes (FR)**

(72) Inventeur : **Devaure, Etienne**
**Résidence ˝La Grande Etoile˝, Batiment**
**A-R.N.8**
**F-13090 Luynes (FR)**

(74) Mandataire : **Corlu, Bernard et al**
**Cabinet Lepeudry 6, rue du Faubourg**
**Saint-Honoré**
**F-75008 Paris (FR)**

(54) **Analyseur de couleur.**

(57)    L'invention concerne un analyseur de couleur pour analyser de façon continue la couleur d'un produit circulant sur un convoyeur, dans une conduite, ou à l'air libre, et présentant une teinte dominante déterminée.

Selon l'invention, l'analyseur comprend une caméra vidéo agencée pour balayer une zone (7) du produit et délivrer en continu trois signaux vidéo primaires correspondant à trois couleurs primaires du produit, des moyens de prélèvement (14) pour prélever en continu lesdits signaux vidéo primaires, et des moyens de calcul (16) pour calculer en continu, à partir desdits signaux vidéo primaires, une valeur d'intensité de ladite teinte dominante.

Application au contrôle de la fabrication, du traitement ou du transport de tout produit solide, liquide ou gazeux.

EP 0 463 960 A1

MODULE
ELECTRONIQUE 14

A/N 15

MICRO
PROCESSEUR 16

N/A 17

CHAINE DE FABRICATION
OU TRAITEMENT

11 12 13

4

6

5

7

1

10

3

2

L'invention est relative à un analyseur de couleur pour analyser de façon continue la couleur d'un produit circulant sur un convoyeur, dans une conduite, ou à l'air libre, et présentant une teinte dominante déterminée. Elle s'applique notamment au contrôle d'une chaîne de fabrication ou de traitement d'un produit solide, liquide ou gazeux, le contrôle du produit par rapport à un produit de référence à obtenir s'effectuant par observation de sa couleur.

Le problème que vise à résoudre l'invention est de proposer un tel analyseur de couleur qui soit peu coûteux et capable de contrôler en permanence le produit, alors que celui-ci circule en continu à une vitesse déterminée qui peut atteindre par exemple la valeur de 1 m/s.

Selon l'invention, l'analyseur de couleur comprend une caméra vidéo agencée pour balayer une zone du produit et délivrer en continu trois signaux vidéo primaires correspondant à trois couleurs primaires du produit, des moyens de prélèvement pour prélever en continu lesdits signaux vidéo primaires, et des moyens de calcul pour calculer en continu, à partir desdits signaux vidéo primaires, une valeur d'intensité de ladite teinte dominante.

De façon surprenante, le Demandeur a donc utilisé une caméra vidéo pour analyser, et ce de manière continue, une image du produit susceptible de varier à grande vitesse, alors qu'une telle caméra est habituellement réservée à l'analyse discrète d'une image fixe ou variant à vitesse lente. Tandis qu'une caméra vidéo est utilisée ordinairement pour restituer une image, le Demandeur l'a employée pour prélever une valeur d'intensité d'une teinte dominante de l'image.

Alors que la caméra vidéo ne permet pas de restituer sans flou une image variant à grande vitesse, ce flou n'affecte avantageusement pas la valeur d'intensité de la teinte dominante de l'image.

Par "analyse continue" on entend un prélèvement de valeurs instantanées successives de chaque signal vidéo primaire sur un certain laps de temps ou plage d'analyse. Dans le cas où le produit réclame une surveillance permanente, la plage d'analyse s'étendra sur toute la durée de la fabrication ou du traitement. Dans les autres cas, la plage d'analyse pourra être de courte durée, par exemple de quelques secondes, l'analyse s'effectuant sur plusieurs plages d'analyse espacées les unes des autres et réparties dans le temps sur toute la durée de fabrication ou traitement.

Avantageusement lesdits moyens de prélèvement comprennent des moyens de filtrage pour filtrer séparément chacun desdits signaux vidéo primaires. Ces moyens de filtrage permettent d'éliminer un signal de synchronisation d'image inclu dans chaque signal vidéo qui constitue, dans l'application envisagée, un signal perturbateur puisqu'en effet une restitution d'image sur un écran n'est pas recherchée. Ces moyens ont aussi pour avantage de délivrer un signal vidéo qui représente une moyenne de plusieurs valeurs instantanées du signal et permettent donc de s'affranchir de valeurs aléatoires.

Selon une forme de réalisation préférée, les moyens de filtrage comprennent une diode montée en série avec un filtre R, C.

Un autre problème que vise à résoudre l'invention est de pouvoir transmettre les signaux vidéo à des moyens de calcul éloignés de la caméra vidéo, indépendamment des chutes de tension dans des câbles de liaison.

A cet effet les moyens de prélèvement comprennent un convertisseur tension/courant.

Selon une forme préférée de réalisation, le convertisseur tension/courant comprend : un amplificateur opérationnel monté de façon à fonctionner en convertisseur tension/courant ; un premier transistor bipolaire monté à une sortie de l'amplificateur opérationnel, et un second transistor bipolaire relié par sa base à une sortie du premier transistor bipolaire.

Avantageusement, les moyens de prélèvement comprennent un amplificateur.

Avantageusement, les moyens de calcul sont agencés pour comparer ladite valeur d'intensité de la teinte dominante avec une valeur d'intensité typique, et pour fournir un signal électrique significatif d'un écart entre ces deux valeurs. Ce signal d'écart est utilisé pour asservir une chaîne de fabrication ou de traitement du produit considéré, ou enclencher diverses alarmes.

Avantageusement, l'analyseur comprend une source de lumière de référence et les moyens de calcul sont agencés pour enregistrer des valeurs significatives d'une intensité et d'une teinte de la lumière de référence et calculer, à partir de ces valeurs, ladite valeur d'intensité de la teinte dominante.

Avantageusement, les moyens de prélèvement sont agencés pour délivrer à chaque instant aux moyens de calcul une valeur de chaque signal vidéo primaire qui correspond à un pixel ou image élémentaire qui est en train d'être observé, et les moyens de calcul sont agencés pour enregistrer l'ensemble des valeurs ainsi prélevées sur une période de temps déterminée.

Il est ainsi possible d'effectuer un traitement particulièrement précis des valeurs enregistrées, tel qu'un calcul d'une moyenne, une analyse statistique, ou une supression de valeurs erronées.

Avantageusement, les moyens de calcul sont agencés pour effectuer un tri entre des premières valeurs de chaque signal vidéo primaire qui correspondent à la teinte dominante du produit ou à une teinte voisine, et des secondes valeurs correspondant à d'autres teintes, et pour calculer ladite valeur d'intensité de la teinte dominante en fonction desdites premières valeurs.

Il est ainsi possible de s'affranchir de toutes les valeurs erronées correspondant, soit à une zone de convoyeur dépourvue de produit, soit - dans le cas où la teinte dominante du produit à analyser résulte de l'ajout d'un réactif chimique approprié - à une zone du produit dépourvue de réactif ou n'ayant pas réagi. En effet, dans tous ces cas, la teinte observée sera sensiblement différente de la teinte dominante recherchée.

D'autres détails et avantages de l'invention apparaîtront au cours de la description suivante d'une forme de réalisation préférée mais non limitative, en regard des dessins annexés sur lesquels :

La figure 1 est une représentation schématique d'un analyseur de couleur selon l'invention ;

La figure 2 est un circuit électrique d'un module électronique faisant partie de l'analyseur de couleur ; et

La figure 3 indique la façon dont la caméra balaye une zone observée d'un tapis mobile.

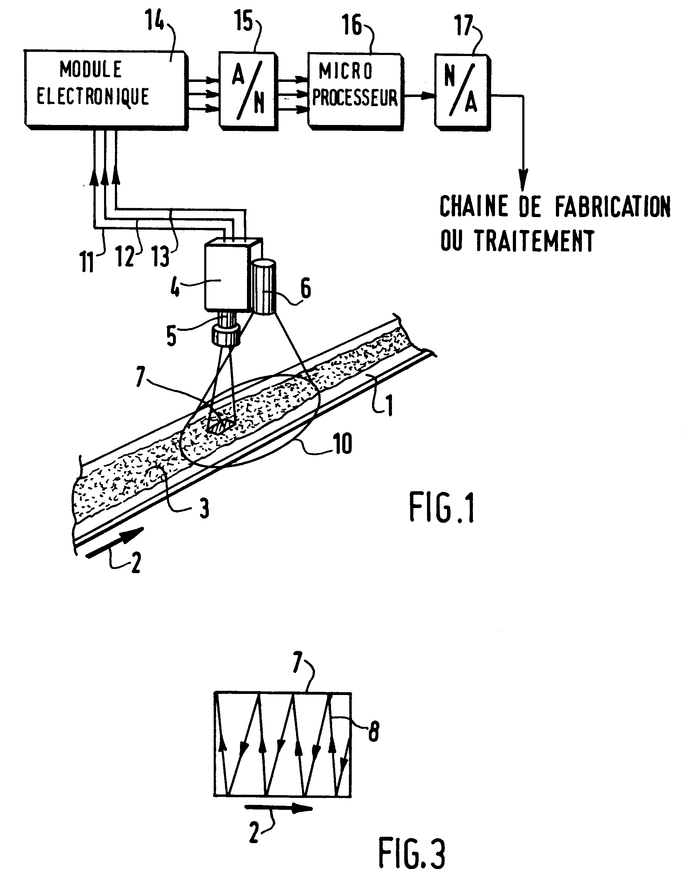

Sur la figure 1, un tapis 1 d'un dispositf de transport non représenté se déplace selon la flèche 2 à une vitesse qui, dans cet exemple, est égale à 1 m/s et porte un chargement d'un produit en poudre fabriqué ou traité de façon continue dans une chaîne de fabrication ou de traitement non représentée.

A l'aplomb du tapis 1, et en aval de la chaîne de fabrication ou de traitement, est disposée une caméra vidéo 4 de type CCD ou tri-CCD, par exemple une caméra commercialisée par la Société JVC, comportant un objectif 5 faisant face au tapis 1. L'objectif 5 délimite une zone de tapis observée 7, dans cet exemple un rectangle d'environ 3 x 2,5 cm. Une source de lumière blanche 6 est disposée à côté de la caméra 4 et délimite une zone de tapis éclairée 10 couvrant la zone de tapis observée 7. Cette source de lumière permet de régler l'analyseur de couleur selon une référence de couleur blanche constante, et notamment indépendante de la lumière environnante.

Sur la figure 3 sont représentées les lignes de balayage 8 de la zone de tapis observée 7 par la caméra 4. Le sens de balayage à contre-courant du sens 2 de déplacement du tapis est avantageux car il permet de prélever le maximum d'informations possible.

La caméra 4 est agencée pour délivrer en sortie trois signaux vidéo primaires correspondant aux trois couleurs primaires rouge, vert, bleu et variant entre 0 et 1V en fonction de l'intensité de la couleur. Ces signaux sont transmis, par trois conducteurs 11, 12, 13, à un module électronique 14 agencé pour traiter ces signaux d'une manière précisée ci-après. Un microprocesseur 16 reçoit séparément les trois signaux primaires traités par le module électronique 14, par l'intermédiaire d'un convertisseur analogique-numérique 15 qui fournit l'intensité de chaque signal sous la forme d'un nombre compris entre 0 et 255. Le microprocesseur pourra notamment être choisi parmi ceux proposés par la Société MOTOROLA ou parmi les microprocesseurs de la Société INTEL.

Le microprocesseur 16 est programmé de façon à calculer instantanément, à partir des trois signaux primaires, une valeur d'intensité d'une teinte dominante du produit 3. Cette teinte dominante peut, si nécessaire, être obtenue en déposant sur le produit 3, en amont de la caméra 4 et sur une bande de largeur égale à celle de la zone de tapis observée 7, un réactif chimique approprié.

De façon connue en soi, si $L_{RF}$, $L_{GF}$, $L_{BF}$ représentent les trois grandeurs photométriques significatives de l'intensité et de la teinte de la source de lumière blanche de référence 6(F) et relatives aux trois couleurs primaires rouge (R), vert (G) et bleu (B), la valeur de l'intensité L de la lumière mesurée, renvoyée vers l'objectif 5 par le produit 3, est égale à :

$$L = RL_{RF} + GL_{GF} + BL_{BF}$$

où R, G, B sont les composantes trichromatiques de la lumière mesurée. L représente l'intensité de la teinte dominante du produit 3.

Par ailleurs, le microprocesseur comporte, dans une mémoire, une valeur d'intensité typique correspondant à une fabrication ou un traitement optimal du produit. Le microprocesseur 16 est programmé pour comparer ladite valeur d'intensité calculée avec la valeur d'intensité typique et, soit afficher le résultat de la comparaison sur un afficheur, soit produire un signal d'asservissement destiné à la chaîne de fabrication ou de traitement.

Dans cet exemple, un convertisseur numérique/analogique 17 reçoit, du microprocesseur 16, un signal d'asservissement qu'il transmet à la chaîne de fabrication ou de traitement sous forme d'une tension comprise entre 0 et 10 V.

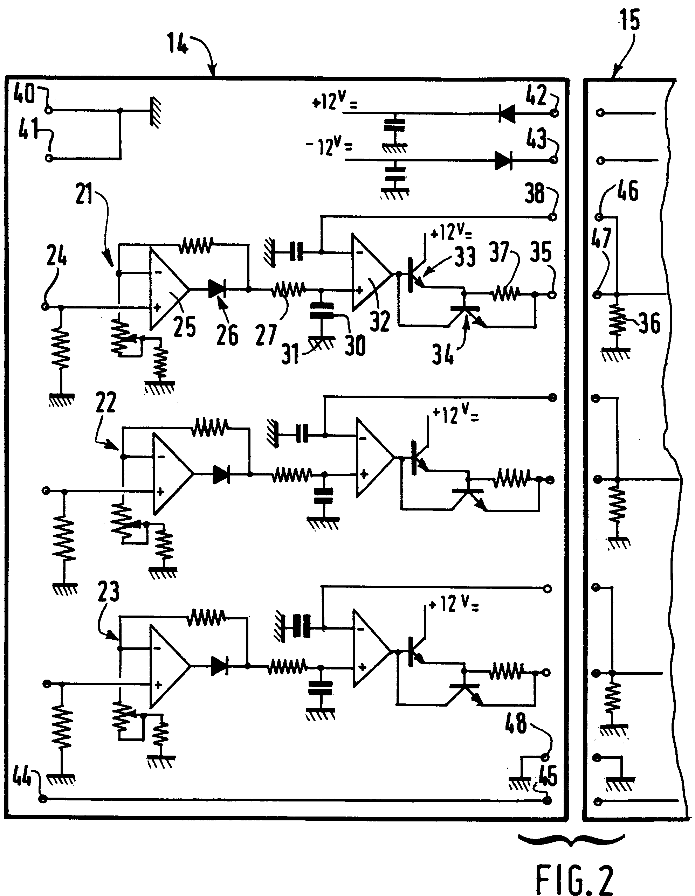

Le module électronique 14 est représenté en détail sur la figure 2. Il comporte trois canaux de traitement identiques 21, 22, 23 affectés respectivement aux trois signaux vidéo primaires et qui seront décrits en référence au canal de traitement 21.

Chaque canal de traitement comporte une entrée 24 reliée à la caméra 4 et recevant l'un des signaux vidéo primaires. Cette entrée 24 est celle d'un amplificateur opérationnel 25 monté de façon à fonctionner en amplificateur non-inverseur. Une diode 26 est montée en série à une sortie de l'amplificateur non-inverseur 25 et permet de prélever une valeur de crête du signal vidéo primaire.

A la suite de la diode 26 est monté un filtre R, C comprenant une résistance 27 montée en série et une capacité 30 montée en parallèle par rapport à une masse 31 du module électronique. En aval du filtre R, C est disposé un amplificateur opérationnel 32 monté de façon à fonctionner en amplificateur tension-courant. Une sortie de l'amplificateur opérationnel 32 attaque la base d'un transistor bipolaire NPN 33 dont l'émetteur attaque la base d'un second transistor bipolaire NPN 34 et dont le collecteur est relié à une source de tension continue. L'émetteur du second transistor 34 rejoint une première sortie 35 du module électronique. Le collecteur du second transistor 34 est relié à la sortie de l'amplificateur, et sa base est reliée à la première sortie 35 du module électronique par une résistance 37. Une deuxième sortie 38 du module électronique est reliée à une entrée négative de l'amplificateur.

Le second amplificateur opérationnel 32 constitue aussi un amplificateur suiveur présentant une impédance de sortie faible par rapport à son impédance d'entrée.

Sur la figure 2 est aussi représentée une partie d'entrée du convertisseur analogique/numérique 15 destinée à coopérer avec la sortie du module électronique 14. Elle comporte notamment deux bornes d'entrée 46, 47 reliées entre elles et destinées à être reliées respectivement aux sorties 38, 35 du module électronique. Entre la borne d'entrée 47 et la masse est montée une résistance 36. Chaque signal vidéo primaire est prélevé sur la borne d'entrée 47.

La sortie du module électronique forme donc une boucle de courant qui est refermée par l'entrée du convertisseur analogique/numérique. Ainsi celui-ci peut être disposé aussi loin que souhaité du module électronique, c'est-à-dire de la chaîne de fabrication ou de traitement, sans que le signal vidéo primaire subisse des chutes de tension dans des câbles de liaison.

En plus des trois canaux de traitement 21, 22, 23, le module électronique présente deux bornes d'entrée 40, 41 reliées, à l'intérieur du module électronique, aux différents points de masse et, à l'extérieur de celui-ci, à la masse de la caméra 4. Du côté des sorties 35, 38 sont prévues deux bornes de prise de tension 42, 43 destinées à fournir au module électronique deux tensions de référence (+12V) et (-12V) reçues du convertisseur analogique/numérique 15. Une borne d'entrée 44 est reliée directement à une borne de sortie 45 et est destinée à transmettre au microprocesseur 16 un signal vidéo composite de l'image du produit 3, en vue de permettre un réglage de l'objectif 5 de la caméra vidéo 4 avant l'utilisation de l'analyseur de couleur. Enfin, une autre borne de sortie 48 est reliée à la masse du module électronique et est destinée à coopérer avec une borne de masse correspondante du convertisseur analogique/numérique 15.

En utilisation, alors que le produit fabriqué ou traité dans la chaîne de fabrication ou de traitement circule sur le tapis 1 devant la caméra 4, celle-ci délivre à chaque instant les trois signaux vidéo primaires relatifs à la couleur dominante du produit. Le module électronique 14 effectue un lissage continu des trois signaux vidéo primaires et supprime avantageusement le signal de synchronisation d'image qui est contenu dans chacun d'eux. En raison de la présence du filtre R, C, les sorties 35, 38 du module électronique fournissent une moyenne de plusieurs valeurs du signal vidéo primaire, par exemple une moyenne des valeurs contenues dans une ligne 8 de balayage, ce qui permet de s'affranchir des variations aléatoires du signal. Le microprocesseur 16 enregistre à chaque instant l'intensité des signaux reçus et calcule une valeur de l'intensité de la teinte dominante du produit.

Dans cet exemple, le microprocesseur 16 fournit en permanence à la chaîne de fabrication ou de traitement un signal d'asservissement destiné à corriger tout écart observé entre l'intensité de la teinte dominante calculée et l'intensité typique recherchée.

En variante, il est prévu un module électronique n'incluant pas de filtre R, C de sorte que sa sortie 35 délivre, non pas une moyenne de plusieurs valeurs, mais une valeur instantanée correspondant à un pixel ou image élémentaire qui est en train d'être lu. Dans ce cas, le microprocesseur 16 enregistre l'ensemble de ces valeurs instantanées et effectue tout traitement désiré, par exemple un tri ou une moyenne arithmétique précise de ces valeurs. Cette variante convient particulièrement au cas où la zone de tapis observée 7 présente plusieurs secteurs déterminés ayant une teinte différente.

L'analyseur de couleur selon l'invention permet de contrôler tout produit solide, liquide ou gazeux dans un processus de fabrication, de traitement, ou de transport du produit, dans lequel la couleur du produit constitue un paramètre de référence pour déterminer sa nature ou évaluer la qualité de sa fabrication ou de son traitement. A titre d'illustration, l'analyseur pourra être disposé à la sortie d'un torréfacteur à café pour mesurer les variations de la teinte marron significative du degré de cuisson du café. Il pourra aussi être utilisé en aval d'une chaîne de fabrication de peinture, de papier, de minerai, en aval d'une chaîne de production d'eau, etc...

**Revendications**

**1.-** Analyseur de couleur pour analyser de façon continue la couleur d'un produit circulant sur un convoyeur, dans une conduite, ou à l'air libre, et présentant une teinte dominante déterminée, caractérisé en ce qu'il comprend :
– une caméra vidéo agencée pour balayer une zone (7) du produit et délivrer en continu trois signaux vidéo primaires correspondant à trois couleurs primaires du produit ;
– des moyens de prélèvement (14) pour prélever en continu lesdits signaux vidéo primaires ; et
– des moyens de calcul (16) pour calculer en continu, à partir desdits signaux vidéo primaires, une valeur d'intensité de ladite teinte dominante.

**2.-** Analyseur selon la revendication 1, dans lequel lesdits moyens de prélèvement comprennent des moyens de filtrage (26, 27, 30) pour filtrer séparément chacun desdits signaux vidéo primaires.

**3.-** Analyseur selon la revendication 2, dans lequel les moyens de filtrage comprennent une diode (26) montée en série avec un filtre (R, C).

**4.-** Analyseur selon l'une quelconque des revendications précédentes, dans lequel les moyens de prélèvement comprennent un convertisseur tension/courant (32, 33, 34).

**5.-** Analyseur selon la revendication 4, dans lequel le convertisseur tension/courant comprend :
– un amplificateur opérationnel (32) monté de façon à fonctionner en convertisseur tension/courant ;
– un premier transistor bipolaire (33) monté à une sortie de l'amplificateur opérationnel ; et
– un second transistor bipolaire (34) relié par sa base à une sortie du premier transistor bipolaire (33).

**6.-** Analyseur selon l'une quelconque des revendications précédentes, dans lequel les moyens de prélèvement comprennent un amplificateur (25).

**7.-** Analyseur selon l'une quelconque des revendications précédentes, dans lequel lesdits moyens de calcul (16) sont agencés pour comparer ladite valeur d'intensité de la teinte dominante avec une valeur d'intensité typique, et pour fournir un signal électrique significatif d'un écart entre ces deux valeurs.

**8.-** Analyseur selon l'une quelconque des revendications précédentes, qui comprend une source de lumière de référence (6), et les moyens de calcul (16) sont agencés pour enregistrer des valeurs significatives d'une intensité et d'une teinte de la lumière de référence et calculer, à partir de ces valeurs, ladite valeur d'intensité de la teinte dominante.

**9.-** Analyseur selon la revendication 1, dans lequel lesdits moyens de prélèvement (14) sont agencés pour délivrer à chaque instant aux moyens de calcul (16) une valeur de chaque signal vidéo primaire qui correspond à un pixel ou image élémentaire qui est en train d'être observé, et les moyens de calcul (16) sont agencés pour enregistrer l'ensemble des valeurs ainsi prélevées sur une période de temps déterminée.

**10.-** Analyseur selon l'une quelconque des revendications précédentes, dans lequel les moyens de calcul (16) sont agencés pour effectuer un tri entre des premières valeurs de chaque signal vidéo primaire qui correspondent à la teinte dominante du produit ou à une teinte voisine, et des secondes valeurs correspondant à d'autres teintes, et pour calculer ladite valeur d'intensité de la teinte dominante en fonction desdites premières valeurs.

14 15 16 17

MODULE ELECTRONIQUE

A/N

MICRO PROCESSEUR

N/A

CHAINE DE FABRICATION OU TRAITEMENT

11 12 13

4 6

5

7

1

10

3

2

FIG.1

7

8

2

FIG.3

FIG.2

**Office européen des brevets**

# RAPPORT DE RECHERCHE EUROPEENNE

Numero de la demande

EP 91 40 1720

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | US-A-4 884 221 (MASAMI SUGIYAMA) <br> * revendications 1-12 * <br> --- | 1,2,7-9 | G01J3/50 |
| X | US-A-4 653 014 (KAZUO MIKAMI ET AL.) <br> * revendications 5,6 * <br> --- | 1,7 | |
| A | US-A-4 797 738 (MOTOFUMI KASHI) <br> * revendications 1-11 * <br> --- | 1,7 | |
| A | EP-A-114 515 (DEVELOPMENT FINANCE CORP.) <br> --- | | |
| A | US-A-3 834 817 (A. VINNEMANN ET AL.) <br> --- | | |
| A | DE-A-3 443 476 (H.A. KAPPNER) <br> ----- | | |

**DOMAINES TECHNIQUES RECHERCHES (Int. Cl.5 )**

G01J
B07C
G01N

Le présent rapport a été établi pour toutes les revendications

| Lieu de la recherche | Date d'achèvement de la recherche | Examinateur |
|---|---|---|
| LA HAYE | 03 OCTOBRE 1991 | VAN DEN BULCKE E.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................................
& : membre de la même famille, document correspondant

EPO FORM 1503 03.82 (P0402)